# EUROPÄISCHE PATENTSCHRIFT

(11) **EP 1 316 483 B1**
(45) Veröffentlichungstag und Bekanntmachung des Hinweises auf die Patenterteilung: **02.03.2005**
(21) Anmeldenummer: 02024324.2
(22) Anmeldetag: 02.11.2002
(51) Int. Cl.: B60R 22/195

(54) **Gurtstraffer**
Safety belt pretensioner
Prétensionneur de ceinture de sécurité

(30) Priorität: 30.11.2001 DE 10158871
(43) Veröffentlichungstag der Anmeldung: 04.06.2003
(73) Patentinhaber: DaimlerChrysler AG, 70567 Stuttgart (DE)
(72) Erfinder: Bullinger, Wilfried, 70825 Korntal-Münchingen (DE); Eberle, Walter, 73269 Hochdorf (DE); Mayer, Christian, 71254 Ditzingen (DE); Woldrich, Markus, 71254 Ditzingen (DE); Wustlich, Kai, 70329 Stuttgart (DE)

(56) Entgegenhaltungen:
- EP-A- 0 893 313
- EP-A- 1 157 905
- WO-A-01/85495
- DE-A- 3 019 298
- DE-A- 10 013 870
- DE-A- 19 961 799
- US-A- 4 026 494
- US-A- 5 316 233

## Beschreibung

Die Erfindung betrifft einen Gurtstraffer eines Sicherheitsgurtes für einen Insassen auf einem Sitz in einem Fahrzeug, insbesondere Kraftfahrzeug, mit
- durch Rückholfeder betätigter Rückholeinrichtung zur selbsttätigen Verkürzung des Gurtes sowie
- bei vorgegebenen Parametern, insbesondere vorgegebener Verzögerung oder Beschleunigung des Fahrzeuges bzw. seines Aufbaus und/oder Überschreitung einer vorgegebenen Auszugsgeschwindigkeit des Gurtes, wirksamer Auszugssperre des Gurtes und
- vorzugsweise vorgesehener irreversibler Spannvorrichtung, welche bei Erhalt eines durch eine Sensorik erzeugbaren Unfallsignales, z.B. Signal zu einer Airbag-Auslösung, kurzzeitig, z.B. für 10 bis 15 ms, eine irreversible Straffung des Gurtes mit starker Kraft, z.B. 4.000 N, bewirkt.

Bei derzeit serienmäßig in Kraftfahrzeugen eingesetzten derartigen Gurtstraffern wird die Rückholeinrichtung durch eine Spiralfeder betätigt, die bei eingezogenem Gurt eine konstruktiv vorgegebene Vorspannung aufweist und beim Ausziehen des Gurtes entsprechend ihrer Federcharakteristik zunehmend gespannt wird.

Die Auszugssperre arbeitet mit mechanischen Riegelorganen. Diese werden einerseits durch Trägheitskörper gesteuert, die aus einer riegelunwirksamen Position in eine riegelwirksame Position verlagert werden, wenn auf den Fahrzeugaufbau wirkende Kräfte eine einen geringen Schwellwert überschreitende Aufbaubeschleunigung bzw. -verzögerung bewirken. Andererseits werden Fliehkraftkörper aus einer riegelunwirksamen Position in eine riegelwirksame Position ausgelenkt, wenn ein zur Aufnahme des Gurtes dienender Wickel mit einer einen Schwellwert überschreitenden Drehbeschleunigung bzw. ruckartig in Auszugsrichtung des Gurtes gedreht wird. Auf diese Weise ist gewährleistet, daß der Gurt bei gefahrgeneigten Fahrsituationen oder gar Unfällen gegen ein (weiteres) Ausziehen des Gurtes sicher arretiert wird.

Im Hinblick auf die Tatsache, daß Fahrer und/oder - insbesondere - Beifahrer eines Fahrzeuges zumindest vorübergehend eine Position außerhalb der normalen oder gewünschten Sitzposition einnehmen können, sind den Gurtstraffern zumindest in höherwertigen Fahrzeugen irreversible Spannvorrichtungen zugeordnet, die typischerweise pyrotechnisch arbeiten und ausgelöst werden, wenn eine entsprechende Sensorik eine Kollision des Fahrzeuges "meldet" bzw. einen im Fahrzeug vorhandenen Airbag auslöst. Diese irreversiblen Gurtstraffer dienen dazu, den Sicherheitsgurt mit großer Kraft zu verkürzen. Auf diese Weise wird jegliche Lose des Gurtes am Körper des Insassen sowie an bzw. auf dem Wickel des Gurtes beseitigt und auch nach Erschlaffung eines zuvor ausgelösten Airbags eine optimale Sicherheit für den jeweiligen Insassen gegenüber eventuellen Sekundärkollisionen gewährleistet. In jedem Fall wird der Insasse von harten Strukturteilen des Fahrzeugaufbaus möglichst ferngehalten.

Zur Verbesserung des Komforts ist es gemäß der DE 39 38 081 A1 bekannt, der zur Betätigung der Rückholeinrichtung vorgesehenen Feder einen Elektromotor zuzuordnen, um das relativ stationäre Widerlager der Rückholfeder zu verstellen. Auf diese Weise kann die Gurtspannung verändert und insbesondere erreicht werden, daß auch bei sehr weit ausgezogenem Gurt, wie es bei überdurchschnittlicher Körpergröße oder -fülle des Insassen notwendig ist, die Spannung des Gurtes gering bleibt und dementsprechend der Tragekomfort verbessert wird. Sobald der Gurt zum Aufwickeln zurückgeführt wird, wird das relativ stationäre Widerlager vom vorgenannten Motor in eine Ausgangsstellung zurückgeführt, so daß der Gurt sicher aufgewickelt werden kann.

Ähnliche Anordnungen sind Gegenstand der DE 41 12 620 A1, der DE 195 01 076 A1 sowie der WO 01/85495 A2. Aus der letztgenannten Druckschrift, die den Oberbegriff des ersten Anspruches darstellt, geht ein Gurtstraffer mit einer Rückhohlfeder, einem in einer Gefahrensituation ansteuerbaren Elektromotor sowie einer pyrotechnischen Straffvorrichtung hervor.

Aufgabe der Erfindung ist es, einen Gurtstraffer zu schaffen, welcher sowohl hinsichtlich des Komforts als auch der Sicherheit verbessert ist.

Diese Aufgabe wird bei einem Gurtstraffer der eingangs angegebenen Art erfindungsgemäß dadurch gelöst, daß
- parallel zur Rückholfeder eine Gegenfeder mit durch Motor verstellbarem gurtfernen Widerlager angeordnet ist,
- zwischen dem Motor und der Rückholeinrichtung eine normal offene Kupplung angeordnet ist,
- der Motor zwischen zwei Leistungsbereichen umsteuerbar ist und
- die Kupplung automatisch schließt, wenn der Motor auf hohe Leistung schaltet und in seiner zu einer reversiblen Gurtstraffung vorgesehenen Laufrichtung arbeitet.

Die Erfindung beruht auf dem allgemeinen Gedanken, die Rückholleinrichtung bei Bedarf, d.h. bei einer sensorisch ermittelten Gefahrensituation, zu einer reversiblen Straffung des Gurtes anzutreiben, derart, daß eine eventuell vorhandene Lose des Gurtes vollständig zurückgeführt wird und der Gurt immer schon wirksam gestrafft ist, bevor aus der Gefahrensituation heraus ein Unfall entstehen kann. Gefahrensituationen können sensorisch beispielsweise dadurch erkannt werden, daß der Betriebszustand der Fahrzeugbremse und/oder Beschleunigungen des Fahrzeuges in Längs- und Querrichtung erfaßt werden. Eine starke Bremsbetätigung und/oder starke Beschleunigungen bzw. Verzögerungen des Fahrzeuges deuten auf gefährliche Situationen hin.

Durch die erfindungsgemäß vorgesehene reversible Gurtstraffung kann also einerseits eine deutlich erhöhte Sicherheit gewährleistet werden, insbesondere kann die irreversible Spannvorrichtung schneller wirken, so daß der Insasse bei einem Unfall sehr früh vom Gurt gehalten wird.

Andererseits bietet der für die reversible Straffung des Gurtes vorgesehene Motor durch seine antriebsmäßige Verbindung bzw. Verbindbarkeit mit dem gurtfernen Widerlager der Gegenfeder die Möglichkeit, bei normalen Fahrsituationen einen besonders hohen Komfort zu gewährleisten, indem der Motor das gurtferne Widerlager der Gegenfeder im Sinne einer Verminderung der wirksamen Spannung der Rückholfeder verstellt, so daß der Insasse den Gurt praktisch nicht merkt. Bei eventuellen Bewegungen des Insassen kann das gurtferne Widerlager der Gegenfeder vorübergehend freigegeben bzw. im Sinne einer Erhöhung der wirksamen Rückzugskraft der Rückholfeder verstellt werden, um die gegebenenfalls notwendige Gurtrückholung zu verbessern.

In ähnlicher Weise kann die Spannung der Gegenfeder auch dann vermindert und damit die wirksame Spannung der Rückholfeder erhöht werden, wenn der Gurt aus dem Gurtschloß ausgelöst wird bzw. unbenutzt bleibt. Auf diese Weise kann der Gurt bei Nichtgebrauch zügig verkürzt bzw. mit relativ starker Federkraft im Nichtgebrauchszustand gehalten werden.

Der zur Verstellung des Federwiderlagers der Gegenfeder vorgesehene Motor hat also eine Vielfachfunktion. Einerseits kann er den Tragekomfort des Gurtes verbessern sowie die Benutzung des Gurtes erleichtern. Andererseits kann der Motor bei einer Gefahrensituation sofort eine stark erhöhte Gurtspannung einstellen, um das Gurtsystem für einen eventuellen Unfall "vorzubereiten".

Gemäß einer bevorzugten Ausführungsform sind der Motor bzw. dessen Antriebsverbindung mit dem gurtfernen Widerlager der Gegenfeder selbsthemmend ausgebildet, so daß die eingestellte Lage des Federwiderlagers bei stillstehendem Motor ohne Energiezufuhr aufrechterhalten bleibt.

Gemäß einer besonders bevorzugten Ausführungsform der Erfindung ist zwischen dem Motor und dem gurtfernen Widerlager der Gegenfeder eine weitere Kupplung angeordnet, welche schließt, wenn der Motor entgegen seiner Laufrichtung für die reversible Gurtstraffung läuft.

Die bei der reversiblen Gurtstraffung schließende Kupplung ist vorzugsweise als Gradientenkupplung ausgebildet, die nur bei hinreichenden Geschwindigkeitsdifferenzen zwischen Kupplungseingang und Kupplungsausgang zu schließen vermag.

Gegebenenfalls kann die vorgenannte Kupplung auch als Fliehkraftkupplung ausgebildet sein.

In zweckmäßiger Ausgestaltung kann hierzu ein Klemmrollenfreilauf mit gebremsten Klemmrollenkäfig vorgesehen sein.

Im übrigen wird hinsichtlich bevorzugter Merkmale der Erfindung auf die Ansprüche sowie die nachfolgende Erläuterung der Zeichnung verwiesen, anhand der eine besonders bevorzugte Ausführungsform der Erfindung näher beschrieben wird.

Dabei zeigt,
- Fig. 1: eine schematisierte Darstellung eines erfindungsgemäßen Gurtstraffersystems,
- Fig. 2: einen Axialschnitt der Rückholeinrichtung mit Rückholfeder, Gegenfeder und Kupplungsanordnungen und
- Fig. 3: eine teilweise geschnittene Achsansicht der Rückholeinrichtung entsprechend dem Pfeil III in Fig. 2.

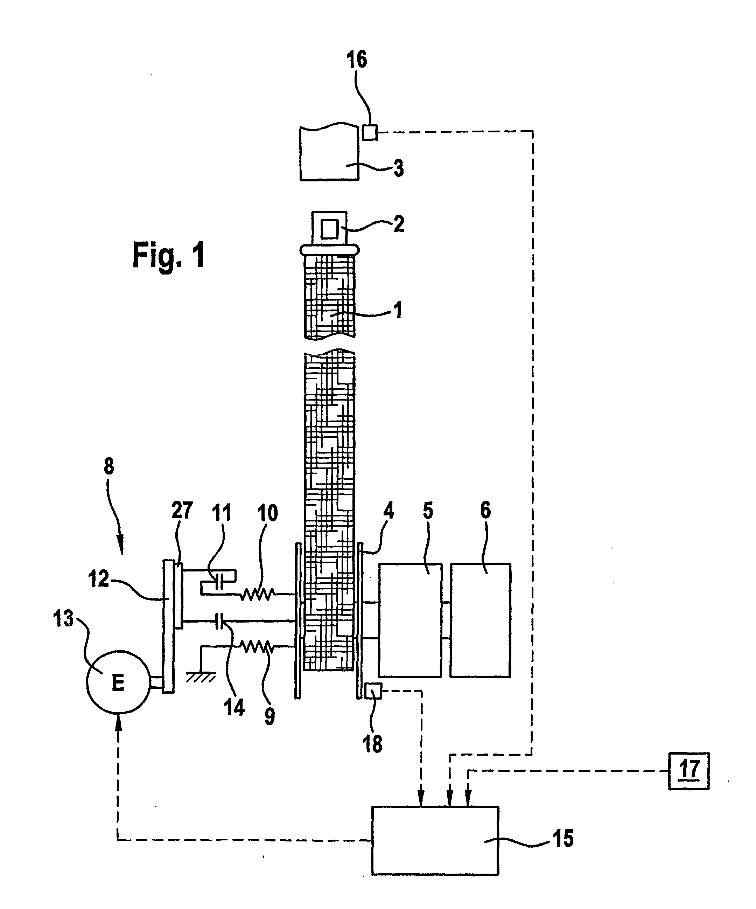

Gemäß Fig. 1 besitzt ein Sicherheitsgurt 1 in bekannter Weise eine an ihm befestigte Schloßzunge 2, die sich in üblicher Weise in ein Gurtschloß 3 einführen bzw. vom Gurtschloß 3 trennen läßt. Der Sicherheitsgurt 1 wird auf einem Wickel 4 aufgewickelt, derart, daß der Sicherheitsgurt 1 die jeweils gewünschte bzw. benötigte Länge hat. Dies wird weiter unten näher erläutert.

Dem Wickel 4 ist in bekannter Weise eine mechanische Auszugssperre 5 zugeordnet, die den Wickel 4 gegen eine Drehung in Abwickelrichtung des Sicherheitsgurtes 1 sperrt, wenn die Drehgeschwindigkeit des Wickels 4 und/oder die Beschleunigung oder Verzögerung des Fahrzeuges, in dem der Sicherheitsgurt 1 angeordnet ist, einen Schwellwert überschreiten.

Des weiteren kann dem Wickel 4 eine irreversible Spannvorrichtung 6 zugeordnet sein, die in bekannter Weise pyrotechnisch arbeitet und gezündet wird, wenn eine fahrzeugseitige Sensorik eine Kollision bzw. eine unmittelbar bevorstehende Kollision des Fahrzeuges erkennt. In diesem Falle bewirkt die Spannvorrichtung 6 eine irreversible Gurtstraffung mit sehr starker Kraft, z.B. 4.000 N. Dadurch kann erreicht werden, daß der durch den Sicherheitsgurt 1 gesicherte Insasse in besonderem Maße vor Kollisionen mit Inneraumteilen des Fahrzeuges geschützt wird.

Außerdem ist der Wickel 4 parallel zur Auszugssperre 5 mit einer Rückholeinrichtung 8 ausgerüstet, um den Sicherheitsgurt 1 bei Nichtgebrauch aufwickeln bzw. verkürzen zu können, wenn der Insasse den Gurt aufgrund einer Körperbewegung ausgezogen hat und sich wiederum in seine Soll-Sitzposition zurückbewegt.

Die Rückholeinrichtung 8 besitzt zu diesem Zweck eine Rückholfeder 9, die als Spiralfeder ausgebildet ist, wie weiter unten dargestellt wird, wobei ein Ende der Rückholfeder 9 mit dem Wickel 4 bzw. einer dazu drehfesten Welle (in Fig. 1 nicht dargestellt) und das andere Ende der Rückholfeder 9 mit einem stationären Widerlager fest verbunden ist.

Parallel zur Rückholfeder 9 ist eine Gegenfeder 10 angeordnet, die ebenfalls als Spiralfeder, jedoch mit gegenüber der Rückholfeder 9 entgegengesetztem Windungssinn, ausgebildet sein kann, wobei ein Ende der Gegenfeder mit dem Wickel 4 bzw. der damit drehfest verbundenen Welle fest verbunden ist, während das andere Ende der Gegenfeder 10 an den Ausgang einer Kupplung 11 fest angebunden ist, deren Eingang über eine Antriebsverbindung 12, beispielsweise ein Zahnriemengetriebe, mit einem Elektromotor 13 antriebsverbunden ist. Die Antriebsverbindung 12 und/oder der Elektromotor sind selbsthemmend ausgebildet.

Parallel zu der Kupplung 11 sowie der dazu in Reihe angeordneten Gegenfeder 10 ist zwischen der Antriebsverbindung 12 und dem Wickel 4 bzw. der damit drehfest verbundenen Welle eine weitere Kupplung 14 angeordnet, welche automatisch schließt, wenn der Elektromotor 13 auf eine hohe Leistungsstufe geschaltet wird und sich entsprechend der Aufwickelrichtung des Gurtwickels 4 dreht.

Zur Steuerung der Leistung des Elektromotors 13 dient eine Steuerschaltung 15, welche eingangsseitig mit einer Sensorik für verschiedene Betriebsparameter verbunden ist.

Diese Sensorik kann einen schloßseitigen Sensor 16 aufweisen, dessen Signal wiedergibt, ob die Schloßzunge 2 in das Gurtschloß 3 eingesteckt ist oder nicht.

Des weiteren ist eine Sensoranordnung 17 vorgesehen, die gefährliche bzw. gefahrengeneigte Fahrsituationen zu erfassen gestattet. Beispielsweise kann die Sensoranordnung 17 die Betätigung von Fahr- und Bremspedal, das Ansprechen einer Bremsassistent-Vorrichtung sowie den Fluiddruck im Bremssystem und damit den Betätigungzustand der Fahrzeugbremse des Fahrzeuges erfassen. Zusätzlich oder alternativ kann die Sensoranordnung 17 auch fahrdynamische Parameter, wie z.B. Querbeschleunigung, Gierrate, Lenkwinkel und/oder Fahrzeugverzögerungen, erkennen und auswerten.

Außerdem kann ein Drehgeber 18 oder ein sonstiger Sensor vorgesehen sein, dessen Signale erkennen lassen, ob der Wickel 4 des Sicherheitsgurtes 1 gedreht bzw. der Sicherheitsgurt 1 in Ein- oder Auszugsrichtung bewegt wird.

Die Steuerschaltung 15 arbeitet wie folgt:
Zunächst sei davon ausgegangen, daß die Sensoranordnung 17 keinen Gefahrenzustand meldet. Außerdem möge sich der Insasse angeschnallt und seit längerer Zeit nicht nennenswert bewegt haben.

Diesen Zustand kann die Steuerhaltung 15 aus den Signalen des Sensors 16 am Gurtschloß 3 sowie des Sensors 18 am Wickel 4 ermitteln. Nunmehr wird der Elektromotor 13 so angesteuert, daß er sich in seiner Drehrichtung zur Spannung der Gegenfeder 10 dreht. Bei dieser Drehrichtung schließt die Kupplung 11, während die Kupplung 14 öffnet bzw. offen bleibt. Entsprechend dem Drehhub des Motors 13 wird die Gegenfeder 10 auf eine mehr oder weniger große Spannung eingestellt. Da die Spannung der Gegenfeder 10 der Spannung der Rückholfeder 9 entgegenwirkt, hat der vorgenannte Stellhub des Elektromotors 13 zur Folge, daß die am Sicherheitsgurt 1 wirksame bzw. fühlbare Rückholkraft entsprechend abgeschwächt wird, beispielsweise auf einen geringen Wert von 2 N. Auf diese Weise wird der Tragekomfort des Gurtes 1 ganz wesentlich erhöht.

Wenn sich nun der Insasse mit maßvoller Geschwindigkeit nach vorne beugt, wird der Sicherheitsgurt 1 entsprechend ausgezogen. Diese Bewegung des Gurtes 1 wird durch den Drehgeber 18 des Gurtwickels 4 gemeldet und kann nun bewirken, daß die Steuerschaltung 15 den Elektromotor 13 mit geringer Leistung derart antreibt, daß die Spannung der Gegenfeder 10 vermindert und dementsprechend die von der Rückholfeder 9 auf den Gurtwickel 4 ausgeübte Rückholkraft zur Aufwicklung des Gurtes 1 erhöht wird. Auf diese Weise wird gewährleistet, daß der Sicherheitsgurt 1 dem Insassen gut folgt, wenn sich dieser aus der vorübergehend nach vorn gebeugten Position in seiner Normalposition zurückbewegt.

Nach einer vorgegebenen Zeitspanne nach der letzten vom Drehgeber 18 gemeldeten Gurtbewegung kann dann der Motor 13 die Gegenfeder 10 wiederum so verstellen, daß die Gurtspannung erneut auf den sehr geringen Wert von beispielsweise 2 N zurückgeführt wird.

Auf diese Weise belastet der Gurt 1 den Insassen praktisch ständig mit äußerst geringer Kraft.

Falls während der Fahrt von der Sensoranordnung 17 ein gefährlicher bzw. gefahrengeneigter Fahrzustand, beispielsweise ein Fahrzustand mit starker Bremsbetätigung, gemeldet wird, steuert die Steuerschaltung 15 den Motor 13 auf einen hohen Leistungsbereich in Rückzugsrichtung des Sicherheitsgurtes 1 bzw. seines Wickels 4 um, wobei gleichzeitig die normal offene Kupplung 14 schließt. Damit treibt der Motor 13 den Wickel 4 mit großer Kraft an, und der Sicherheitsgurt 1 wird mit entsprechend großer Kraft, beispielsweise 20 N oder mehr, straff gezogen. Diese reversible Gurtstraffung gewährleistet, daß der Sicherheitsgurt 1 straff am Körper des Insassen anliegt und insbesondere eine gegebenenfalls vorhandene bzw. vom Insassen provozierte Lose des Sicherheitsgurtes 1 schnellstens zurückgeführt wird. Sollte nun tatsächlich ein Unfall auftreten, ist gewährleistet, daß der Insasse in einen gut gestrafften Sicherheitsgurt 1 fällt.

Wenn die Schloßzuge 2 aus dem Gurtschloß 3 ausgelöst wird, erzeugt der Sensor 16 ein entsprechendes Signal. Dies kann dazu führen, daß die Steuerschaltung 15 den Motor 13 wiederum so ansteuert, daß dieser mit geringer Leistung in derjenigen Drehrichtung läuft, bei der die Spannung der Gegenfeder 10 vermindert bzw. die zuvor gegebenenfalls geschlossene Kupplung 11 geöffnet wird. Auf diese Weise wird die Federspannung der Rückholfeder 9 unvermindert zur Rückholung des Sicherheitsgurtes 1 wirksam, d.h. der Sicherheitsgurt 1 wird schnell und vollständig aufgewickelt und von der Rückholfeder 9 im aufgewickelten Nichtgebrauchszustand gehalten.

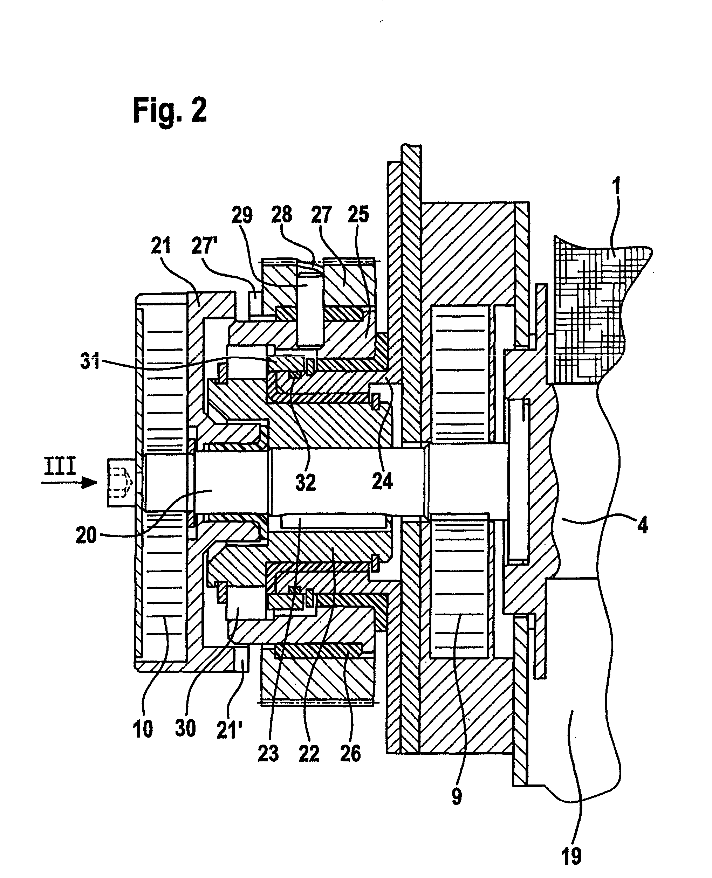

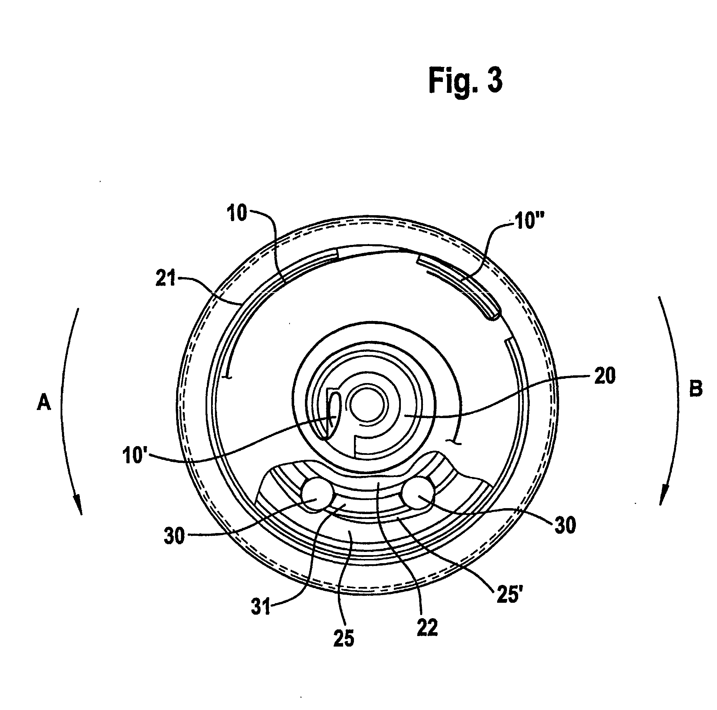

In den Fig. 2 und 3 ist nun beispielhaft dargestellt, wie die Rückholeinrichtung 8 mit Rückholfeder 19, Gegenfeder 10 und Kupplungen 11 und 14 ausgebildet sein kann.

Der in Fig. 2 nur ausschnittsweise dargestellte und an einem Rahmen 19 drehgelagerte Wickel 4 ist über eine mit ihm drehfest verbundene Welle 20 mit dem radial inneren Ende der als Spiralfeder ausgebildeten Rückholfeder 9 verbunden, deren radial äußeres Ende stationär, d.h. rahmenfest, gehaltert ist. Des weiteren ist die Welle 20 mit dem radial inneren Ende 10' der ebenfalls als Spiralfeder augebildeten Gegenfeder 10 verbunden, deren Wicklungssinn dem Wicklungssinn der Rückholfeder 9 entgegengesetzt ist. Das radial äußere Ende 10" der Gegenfeder 10 ist an einem auf der Welle 20 drehgelagerten, hohlradförmigen Federwiderlager 21 befestigt, welches mit einer Stirnverzahnung 21' auf seiner von der Gegenfeder 10 abgewandten Seite versehen ist.

Axial zwischen dem Federwiderlager 21 und der Rückholfeder 9 ist auf der Welle 20 ein Hülsenteil 22 drehfest angeordnet, wobei die drehfeste Verbindung durch eine aus der Welle 20 radial herausragende Leiste 23 gewährleistet wird, die in eine entsprechende axiale Nut am Innenumfang des Hülsenteiles 22 eingreift.

Mit einem Teilbereich seines Außenumfanges ist das Hülsenteil 22 unter Zwischenschaltung eines Gleitringes in einer stationären Hülse 24 drehgelagert. Auf dem Außenumfang der stationären Hülse 24 ist unter Zwischenschaltung eines weiteren Gleitringteiles ein radial äußeres Hülsenteil 25 drehgelagert, auf dessen Außenumfang unter Zwischenschaltung einer Gleithülse 26 ein Zahnrad 27 drehbar und axial verschiebbar angeordnet ist.

Dieses Zahnrad 27 besitzt eine Stirnverzahnung 27', welche bei entsprechender axialer Verschiebung des Zahnrades 27 in die Stirnverzahnung 21' des Federwiderlagers 21 unter drehfester Kupplung von Zahnrad 27 und Federwiderlager 21 eingreift.

Das ringkranzförmige Zahnrad 27 wird von einem schräg zur Umfangsrichtung ausgerichteten Schlitz 28 radial durchsetzt, welcher als kulissenartige Führung mit einem Stift 29 zusammenwirkt, der aus dem Hülsenteil 25 nach radial außen heraussteht und relativ zum Hülsenteil 25 stationär angeordnet ist. Falls also zwischen dem Hülsenteil 25 und dem Zahnrad 27 ein Drehmoment auftritt, wird sich das Zahnrad 27 relativ zum Hülsenteil 25 entsprechend der Abmessung des Schlitzes 28 in Umfangsrichtung des Zahnrades 27 drehen, wobei je nach Drehrichtung eine Axialverschiebung in Fig. 2 nach rechts oder links erfolgt, wobei der Schlitz 28 so bemessen ist, daß das Zahnrad 27 mit seiner Stirnverzahnung 27' in die Stirnverzahnung 21' des Federwiderlagers 21 eingreifen kann.

Die in Fig. 2 linken axialen Endbereiche der Hülsenteile 22 und 25 bilden zusammen mit radial zwischen ihnen angeordneten Klemmrollen 30 einen Klemmrollenfreilauf, wie nachfolgend erläutert wird. Den Klemmrollen 30 ist ein hülsenartiger Käfig 31 zugeordnet, dessen eine axiale Hälfte entsprechende Aussparungen zur Aufnahme der Klemmrollen 30 aufweist und dessen andere axiale Hälfte auf der stationären Hülse 24 gegen bremsenden Widerstand drehbar ist. Der bremsende Widerstand wird durch einen Reibring 32 erzeugt, welcher in einer Umfangsnut der stationären Hülse 24 angeordnet ist.

Wie insbesondere der Fig. 3 entnommen werden kann, besitzt der mit den Klemmrollen 30 zusammenwirkende Teil des Hülsenteiles 22 einen kreisförmigen Außenumfang, während an dem mit den Klemmrollen 30 zusammenwirkenden Axialabschnitt des Innenumfanges des Hülsenteiles 25 Klemmrampen 25' ausgebildet sind, derart, daß die Klemmrollen 30 zwangsläufig zwischen den Hülsenteilen 22 und 25 verklemmt werden, wenn sich das Hülsenteil 25 relativ zum Klemmrollenkäfig 31 und zum Hülsenteil 22 in Pfeilrichtung A dreht.

Das Zahnrad 27 ist, wie nur in der Fig. 1 schematisiert dargestellt ist, über die Antriebsverbindung 12 mit dem Elektromotor 13 antriebsverbunden.

Wenn das Zahnrad 27 in Fig. 3 in Pfeilrichtung B gedreht wird, verschiebt es sich in Fig. 2 axial nach links, so daß die Stirnverzahnung 27' des Zahnrades 27 in Eingriff mit der Stirnverzahnung 21' des Federwiderlagers 21 gelangt. Außerdem wird bei der vorgenannten Drehung des Zahnrades 27 in Pfeilrichtung B über den Stift 29 das Hülsenteil 25 mitgedreht. Im Ergebnis wird also einerseits das Zahnrad 27 mit dem Federwiderlager 21 gekuppelt, so daß bei weiterer Drehung in Richtung B die Gegenfeder 10 zunehmend gespannt wird. Andererseits nehmen die Klemmrollen 30 ihre Freilauflage zwischen den Hülsenteilen 22 und 25 ein, d.h. das Zahnrad 27 ist von der Welle 20 entkuppelt.

Bei Drehung des Zahnrades 27 in Pfeilrichtung A wird das Zahnrad 27 in Fig. 2 axial nach rechts verschoben, wobei die Stirnverzahnung 27' des Zahnrades 27 aus der Stirnverzahnung des Federwiderlagers 21 austritt und das Federwiderlager 21 freigibt. Damit kann sich die Gegenfeder 10 entspannen.

Falls das Zahnrad 27, insbesondere bei hoher Leistung des Elektromotors 13, weiter in Pfeilrichtung A der Fig. 3 gedreht wird, wird das Hülsenteil 25 in Pfeilrichtung A mitgedreht, sobald der Stift 29 am entsprechenden Ende des Schlitzes 28 anschlägt. Dies hat zur Folge, daß die Klemmrollen 30 von den Klemmrampen 25' gegen den Außenumfang des Hülsenteiles 22 geklemmt werden und dementsprechend die Hülsenteile 25 und 22 miteinander gekuppelt werden. Dies führt dann dazu, daß bei weiterer Drehung des Zahnrades 27 in Pfeilrichtung A die mit dem Hülsenteil 22 drehfest verbundene Welle 20 in Pfeilrichtung A mitgedreht und dementsprechend der Wickel 4 in Aufwickelrichtung des Sicherheitsgurtes 1 gedreht wird. Auf diese Weise wird die oben erläuterte reversible Gurtstraffung ermöglicht.

Abweichend von der zeichnerisch dargestellten Ausführungsform kann die irreversible Spannvorrichtung statt am Wickel 4 auch am Schloß 3 oder am nicht dargestellten Endbeschlag des Beckengurtes angeordnet sein, der an der Schloßzunge 2 den dargestellten Brustgurt 1 fortsetzt, wobei die Schloßzunge 2 auf dem Gurt leicht verschiebbar angeordnet ist.

Die Anordnung am Wickel 4 ist vorteilhaft, um eine besonders gute Straffung des Gurtes im Brustbereich zu erreichen.

Die Anordnung am Endbeschlag bewirkt eine besonders gute Gurtstraffung im Beckenbereich. Eine schloßseitige Anordnung ermöglicht insbesondere bei einem üblichen kombinierten Brust- und Beckengurt, auch als Dreipunktgurt bezeichnet, einen besonders guten Kompromiß bezüglich Straffung im Brust- und Beckenbereich.

## Patentansprüche

1. Gurtstraffer eines Sicherheitsgurtes (1) für einen Insassen auf einem Sitz in einem Fahrzeug, insbesondere Kraftfahrzeug, mit
- durch Rückholfeder (9) betätigter Rückholeinrichtung (8) zur selbsttätigen Verkürzung des Gurtes sowie
- bei vorgegebenen Parametern, insbesondere vorgegebener Verzögerung oder Beschleunigung des Fahrzeuges und/oder Überschreitung einer vorgegebenen Auszugsgeschwindigkeit des Gurtes, wirksamer Auszugssperre (5) des Gurtes und
- vorgesehener irreversibler Spannvorrichtung (6), welche bei Erhalt eines durch eine Sensorik erzeugbaren Unfallsignales kurzzeitig eine irreversible Straffung des Gurtes mit starker Kraft bewirkt,
**dadurch gekennzeichnet,**
**daß**
- parallel zur Rückholfeder (9) eine Gegenfeder (10) mit durch Motor (13) verstellbarem gurtfernen Widerlager (21) angeordnet ist,
- zwischen dem Motor (13) und der Rückholeinrichtung (8) eine normal offene Kupplung (22,30,25) angeordnet ist,
- der Motor (13) zwischen zwei Leistungsbereichen umsteuerbar ist und
- die Kupplung (22,30,25) automatisch schließt, wenn der Motor (13) auf hohe Leistung schaltet und in seiner zu einer reversiblen Gurtstraffung vorgesehenen Laufrichtung (A) arbeitet.

2. Gurtstraffer nach Anspruch 1,
**dadurch gekennzeichnet,**
**daß** der Motor (13) und/oder dessen Antriebsverbindung (12) mit dem gurtfernen Widerlager (21) der Gegenfeder (10) selbsthemmend ausgebildet sind.

3. Gurtstraffer nach Anspruch 1 oder 2,
**dadurch gekennzeichnet,**
**daß** zwischen Motor (13) und Widerlager (21) der Gegenfeder (10) eine weitere Kupplung (21',27') angeordnet ist, welche schließt, wenn der Motor (13) entgegen seiner Laufrichtung für die reversible Gurtstraffung läuft.

4. Gurtstraffer nach einem der Ansprüche 1 bis 3,
**dadurch gekennzeichnet,**
**daß** die erstere Kupplung (22,30,25) als Gradientenkupplung ausgebildet ist, welche schließt, wenn zwischen Kupplungseingang und Kupplungsausgang größere Relativgeschwindigkeiten in einer Relativrichtung auftreten.

5. Gurtstraffer nach Anspruch 4,
**dadurch gekennzeichnet,**
**daß** die Gradientenkupplung als Klemmrollenfreilauf (22,30,25) ausgebildet ist.

6. Gurtstraffer nach einem der Ansprüche 3 bis 5,
**dadurch gekennzeichnet,**
**daß** die weitere Kupplung (21',27') als Verzahnungskupplung mit axial ineinandergreifenden Stirnverzahnungsteilen ausgebildet ist.

7. Gurtstraffer nach einem der Ansprüche 1 bis 6,
**dadurch gekennzeichnet,**
**daß** der Motor (13) von einer Steuerschaltung (15) auf seine für die reversible Gurtstraffung vorgesehene Leistung und Laufrichtung geschaltet wird, wenn eine Sensoranordnung (17) einen unfallgeneigten Fahrzustand meldet.

8. Gurtstraffer nach Anspruch 7,
**dadurch gekennzeichnet,**
**daß** die Sensoranordnung (17) den Fluiddruck einer Betriebsbremse des Fahrzeuges und/oder Beschleunigungen des Fahrzeuges überwacht und ein Gefahrensignal erzeugt, wenn der Fluiddruck und/oder die Beschleunigungen bzw. Verzögerungen jeweils einen Schwellwert überschreiten.

9. Gurtstraffer nach einem der Ansprüche 1 bis 8,
**dadurch gekennzeichnet,**
**daß** die irreversible Spannvorrichtung (6) bei einem kombinierten Brust- und Beckengurt am Gurtschloß (3) angeordnet ist.

## Claims

1. Belt tensioner of a seat belt (1) for an occupant of a seat in a vehicle, in particular a motor vehicle, comprising
- a return device (8) operated by a return spring (9) for the automatic shortening of the belt, and
- a pull-out catch (5) of the belt effective at predetermined parameters, in particular at a predetermined deceleration or acceleration of the vehicle and/or when a predetermined pull-out speed of the belt is exceeded, and
- an irreversible tensioning device (6) which, when receiving an accident signal generated by a sensor system, temporarily effects an irreversible tensioning of the belt with great force,
**characterised in that**
- a counter-spring (10) with an abutment (12) adjustable by a motor (13) and remote from the belt is arranged parallel to the return spring (9),
- a normally disengaged clutch (22, 30, 25) is located between the motor (13) and the return device (8),
- the motor (13) is reversible between two power ranges, and
- the clutch (22, 30, 25) engages automatically when the motor (13) switches to high power and runs in the direction (A) provided for reversible belt tensioning.

2. Belt tensioner according to claim 1,
**characterised in that**
the motor (13) and/or its drive connection (12) to the abutment (21) of the counter-spring (10) remote from the belt are/is designed to be self-locking.

3. Belt tensioner according to claim 1 or 2,
**characterised in that**
a further clutch (21', 27'), which engages when the motor (13) runs against the direction for reversible belt tensioning, is located between the motor (13) and the abutment (21) of the counter-spring (10).

4. Belt tensioner according to any of claims 1 to 3,
**characterised in that**
the first clutch (22, 30, 25) is designed as a gradient clutch engaging at higher relative speeds in one relative direction between clutch input and clutch output.

5. Belt tensioner according to claim 4,
**characterised in that**
the gradient clutch is designed as a one-way roller clutch (22, 30, 25).

6. Belt tensioner according to any of claims 3 to 5,
**characterised in that**
the further clutch (21', 27') is designed as a toothed clutch with axially engaging end tooth sections.

7. Belt tensioner according to any of claims 1 to 6,
**characterised in that**
the motor (13) is switched to the power and direction provided for reversible belt tensioning by a control circuit (15), when a sensor arrangement (17) reports a driving condition inclined towards an accident.

8. Belt tensioner according to claim 7,
**characterised in that**
the sensor arrangement (17) monitors the fluid pressure of a service brake of the vehicle and/or accelerations of the vehicle and generates a danger signal whenever the fluid pressure and/or the accelerations or decelerations exceed a limit value.

9. Belt tensioner according to any of claims 1 to 8,
**characterised in that**
the irreversible tensioning device (6) is located on the buckle (3) in a combined shoulder and lap belt.

## Revendications

1. Prétensionneur de ceinture de sécurité (1) pour un passager assis sur un siège de véhicule, en particulier de véhicule à moteur, avec
- un dispositif de retenue (8) actionné par ressort de retenue (9) pour le raccourcissement automatique de la ceinture ainsi que
- pour des paramètres donnés, en particulier pour un ralentissement ou une accélération donné(e) du véhicule et/ou un dépassement d'une vitesse de sortie prescrite de la ceinture de sécurité, un système de blocage de sortie efficace (5) de la ceinture de sécurité et
- un dispositif de tension irréversible prévu (6), lequel entraîne à court terme, à réception d'un signal d'accident produit par un système de capteurs, une tension irréversible de la ceinture de sécurité avec une forte puissance
**caractérisé en ce que**,
- est disposé parallèlement au ressort de retenue (9) un ressort antagoniste (10) avec culée (21) située loin de la ceinture et réglable par moteur (13),
- est disposé entre le moteur (13) et le dispositif de retenue (8) un accouplement ouvert de façon normale (22, 30, 25),
- le moteur (13) peut être commuté entre deux plages de puissance et
- l'accouplement (22, 30, 25) se ferme automatiquement lorsque le moteur (13) se commute sur la puissance élevée et fonctionne dans sa direction (A) prévue pour obtenir une tension réversible de la ceinture de sécurité.

2. Prétensionneur de ceinture de sécurité selon la revendication 1, **caractérisé en ce que** le moteur (13) et/ou l'assemblage d'entraînement (12) de celui-ci sont conçus de façon autobloquante avec la culée (21) du ressort antagoniste (10) située loin de la ceinture.

3. Prétensionneur de ceinture de sécurité selon la revendication 1 ou 2, **caractérisé en ce que**, entre le moteur (13) et la culée (21) du ressort antagoniste (10) est disposé un autre accouplement (21', 27'), lequel se ferme lorsque le moteur (13) fonctionne contre sa direction prévue pour la tension réversible de la ceinture de sécurité.

4. Prétensionneur de ceinture de sécurité selon l'une quelconque des revendications 1 à 3, **caractérisé en ce que** le premier accouplement (22, 30, 25) est conçu comme accouplement à gradient, lequel se ferme lorsque des vitesses relatives plus importantes apparaissent entre l'entrée de l'accouplement et la sortie de l'accouplement dans une direction relative.

5. Prétensionneur de ceinture de sécurité selon la revendication 4, **caractérisé en ce que** l'accouplement à gradient est conçu comme roue libre à serrage (22, 30, 25).

6. Prétensionneur de ceinture de sécurité selon l'une quelconque des revendications 3 à 5, **caractérisé en ce que** l'autre accouplement (21', 27') est conçu comme accouplement à engrenage avec des parties de denture frontale s'engrenant de façon axiale.

7. Prétensionneur de ceinture de sécurité selon l'une quelconque des revendications 1 à 6, **caractérisé en ce que** le moteur (13) est commuté par un circuit de commande (15) sur sa puissance et sa direction de fonctionnement prévue pour la tension réversible de la ceinture de sécurité, lorsqu'une disposition de capteurs (17) annonce un état de conduite relatif à un accident.

8. Prétensionneur de ceinture de sécurité selon la revendication 7, **caractérisé en ce que** la disposition de capteurs (17) surveille la pression fluidique d'un frein principal du véhicule et/ou les accélérations du véhicule et produit un signal de danger lorsque la pression fluidique et/ou les accélérations ou les ralentissements dépassent respectivement une valeur seuil.

9. Prétensionneur de ceinture de sécurité selon l'une quelconque des revendications 1 à 8, **caractérisé en ce que** le dispositif de tension irréversible (6) est, sur une ceinture de sécurité combinée poitrine-bassin, disposé sur le boîtier de ceinture (3).
